Europäisches Patentamt

European Patent Office

Office européen des brevets

(11) Veröffentlichungsnummer : **0 094 334**
B1

(12) # EUROPÄISCHE PATENTSCHRIFT

(45) Veröffentlichungstag der Patentschrift :
21.01.87

(21) Anmeldenummer : 83630074.9

(22) Anmeldetag : 29.04.83

(51) Int. Cl.⁴ : **B 22 D 41/00**, F 27 B 14/00, H 05 B 6/24

(54) Vorrichtung zum metallurgischen Behandeln von flüssigen Metallen.

(30) Priorität : 07.05.82 LU 84133

(43) Veröffentlichungstag der Anmeldung :
16.11.83 Patentblatt 83/46

(45) Bekanntmachung des Hinweises auf die Patenterteilung : 21.01.87 Patentblatt 87/04

(84) Benannte Vertragsstaaten :
AT BE CH DE FR GB IT LI NL SE

(56) Entgegenhaltungen :
DE-A- 2 114 452
DE-A- 2 744 435

(73) Patentinhaber : **Metz, Paul**
18 rue J.P. Brasseur
L-1258 Luxembourg (LU)

(72) Erfinder : **Metz, Paul**
18 rue J.P. Brasseur
L-1258 Luxembourg (LU)
Erfinder : **Melan, Corneille**
43 Bd Charles Simonis
L-2539 Luxembourg (LU)

EP 0 094 334 B1

## Beschreibung

Die Erfindung betrifft eine Vorrichtung zum metallurgischen Behandeln von flüssigen Metallen vor dem Giessen gemäß dem Oberbegriff des Patentanspruchs.

Der vom schmelzofen oder Frischgefäss, in den meisten Fällen ein Konverter, in die Transportpfanne abzugiessende flüssige Stahl soll in Abhängigkeit von der Stahlqualität eine Temperatur von etwa 1 550-1 750 °C aufweisen. Mittels der auf Schienen beweglichen Pfannen in welchen ggf. noch eine metallurgische Behandlung erfolgt, wird der Stahl zur Stranggiessanlage gebracht und in den Verteiler überführt wo die Temperatur noch so hoch sein muss, dass keine lokalen Erstarrungen des Metalles eintreten.

Will man Temperaturen in der Grössenordnung von 1 700 °C im Konverter selbst erreichen, sei es um nachträglichen Temperaturverlusten vorzubeugen, oder weil legierte Stähle höherer Giesstemperaturen bedürfen, so wird man die feuerfeste Auskleidung des Konverters verstärkt beanspruchen und einen raschen Verschleiss beobachten.

Somit kann es notwendig sein, den Stahl nach dem Abgiessen aus dem Konverter einer zusätzlichen metallurgischen Behandlung zu unterziehen, die sowohl eine Zugabe von Legierungs- und/oder Reinigungs-Zusätzen, als auch ein Aufheizen umfassen kann.

Das Aufheizen des Stahles in der Pfanne im Hinblick auf das Stranggiessen erfolgt üblicherweise mittels Lihtbogenanlagen. Diese Verfahrensweise hat aber insbesondere den grossen Nachteil dass in dem heissen Brennfleck eine ausgeprägte unkontrollierte Stickstoffaufnahme erfolgt. Diesen Nachteil versucht man wenigstens teilweise dadurch zu unterbinden, dass man die Lichtbogenanlage unter Vakuum oder unter Luftausschluss betriebt, wobei die Aufheizelektroden in einer auf die Pfannen passenden Abdeck-Vorrichtung angeordnet sind. Ausserdem erfordert dies eine absolute Schlackenfreiheit der Badoberfläche, sodass ein kompliziertes und zeitraubendes Umgiessen bzw. ein peinliches Entschlacken notwendig sind.

Gemäss einer anderen bekannten Verfahrensweise wird das Metall durch Induktion aufgeheizt. Hierfür sind mit induktiven Heizvorrichtungen am Boden oder an der Seitenwand ausgerüstete Spezialpfannen vorgeschlagen worden.

Eine bekannte Aufheiz-Vorrichtung besteht aus einer am Boden mit einem sogenannten Kanal-Induktor versehenen Pfanne, wobei der Induktor aus einem etwa halbkreisförmigen Rohr besteht, das mit felderzeugenden Spulen versehen ist, und das mit zwei im Boden der Pfanne befindlichen Oeffnungen in Verbindung steht. Mittels dem in dem Hohlinduktor erzeugten Feld wird das durch das Rohr hindurchgeführte Metall induktiv aufgeheizt, sodass nach und nach der ganze Pfanneninhalt auf eine höhere Temperatur gebracht werden kann.

Der Nachteil dieser Vorrichtungen liegt insbesondere in deren notwendiger Spezial-Ausführung, nämlich dem empfindlichen Kanal-Induktor-Teil, welches insbesondere Probleme hinsichtlich der feuerfesten Auskleidung mit sich bringt, da letztere wie leicht einzusehen, öfter erneuert werden muss als dies für die Auskleidung der Pfanne selbst zutrifft.

Weiter ist das Legieren bzw. das Aufkohlen von Stahl in den bisher bekannten Anlagen recht problematisch, besonders wenn es sich um grössere Mengen handelt.

Aus der den Oberbegriff des Anspruchs bildenden DE-A-2 017 469 ist eine Vorrichtung zum Behandeln von flüssigen Metallen vor dem Giessen bekannt, bei der das Metall aus der Giesspfanne über ein Steigrohr in ein gesondertes Zwischengefäss überführt und dort behandelt wird. In das Zwischengefäss kann ein nicht oxydierendes Gas eingeblasen werden oder es kann an eine Vakuumpumpe angeschlossen werden.

Aus der Zeitschrift « Revue de Métallurgie », April 1977, Seite 271 bis 279 ist eine an Vakuum angeschlossene beheizbare Stahl-Behandlungskammer bekannt (RH-Anlage). Die Kammer besitzt an der Unterseite zwei rohrförmige Verlängerungen welche in das in der Transportpfanne enthaltene flüssige Metall getaucht werden. Die Umwälzung des Metall geschieht mittels Unterdruck und Gashebereffekt.

Die Aufgabe der Erfindung bestand darin, die obigen Nachteile zu vermeiden und eine Vorrichtung vorzuschlagen die es erlaubt, frisch abgestochenes Metall in schlackenfreiem Zustand aufzuheizen und eventuell mit Zusätzen zu beschicken, es zu reinigen und sowohl chemisch als auch thermisch zu homogenisieren.

Diese Aufgabe wird durch die im Anspruch angegebenen Merkmale gelöst. Die rohrförmige Verlängerung dient zum Transport des flüssigen Metalls, das sich in der Transportpfanne befindet und weist infolgedessen eine die Ausmasse der in Frage kommenden Transportpfannen berücksichtigende Länge auf. Das Rohr ist mit einer feuerfesten Auskleidung versehen. Eine erste, bevorzugte Ausführungsform sieht 2 derartige Rohre vor, wobei die Funktionsweise der Einrichtung, insbesondere was das Einführen des Metalls in den Ofenraum und das Zirkulieren des Metalls anbelangt, dem Arbeitsprinzip der bekannten RH-Anlagen zum Vakuumbehandeln von Metallschmelzen entspricht. Man kann auch, entsprechend einer zweiten Ausführungsform, nur ein Rohr vorsehen und das flüssige Metall durch dieses sowohl in die, als auch aus der Ofenpfanne befördern.

Versieht man das Ende der Verlängerung mit einer dünnen Blechhaube, so kann man die Schlackenschicht durchdringen und nach Abschmelzen des Bleches schlackenfreies Metall in den Ofenraum befördern. Das Metall wird in der erfindungsgemässen Einrichtung elektrisch beheizt und zwar vorzugsweise mittels einer Induktionsspule, die auch einen Rühreffekt hervorrufen kann, oder auch mittels Lichtbogen- oder Tauchelektroden.

Ein wesentlicher, durch die Erfindung gebotener Vorteil besteht darin, dass sie erlaubt eine Fülle metallurgischer Behandlungen innerhalb eines relativ begrenzten Raums und völlig schmelzschlackenfrei durchzuführen und die Schmelze obendrein zu beheizen, wobei gerade wegen der knappen Raumverhältnisse die Wärmeverluste durch Abstrahlen auf ein Minimum beschränkt werden.

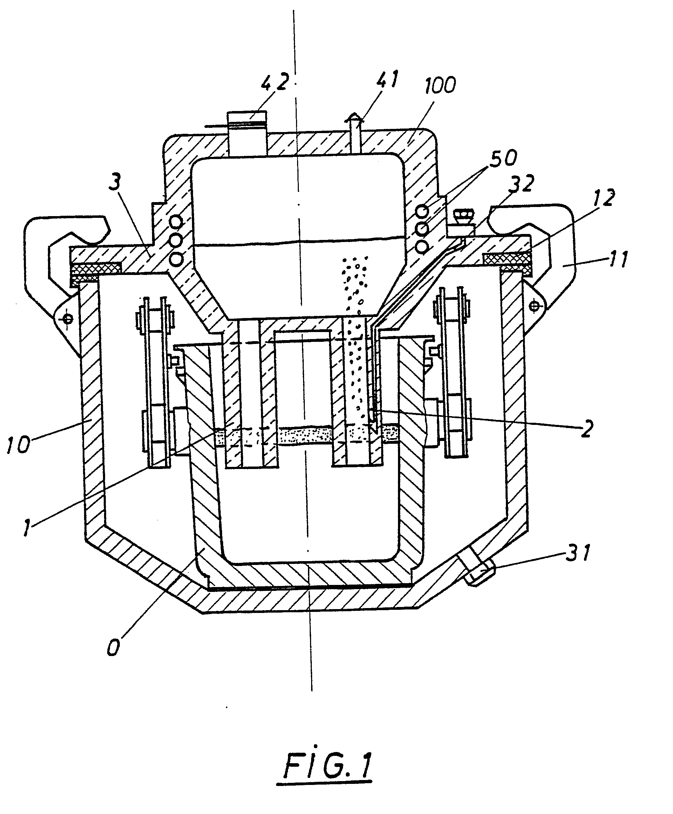

Weitere Vorteile und Merkmale gehen aus der Beschreibung der schematischen Zeichnung hervor, in der die Fig. 1 in nicht einschränkender Weise einen Schnitt durch eine mögliche Ausführungsform der Einrichtung nach dem Anspruch darstellt.

Die gezeigte Einrichtung umfasst ein oben geschlossenes Ofenteil 100 und zwei sich nach unten erstreckende, rohrförmige Verlängerungen 1, 2. Diese Rohre sind so dimensioniert, dass sie beim Aufsetzen der Einrichtung auf eine volle Transportpfanne 0 jedenfalls unter die Schlackenschicht reichen. Die Pfanne 0 befindet sich innerhalb eines Druckbehälters 10 wobei dieser auf einer nicht gezeigten Hebebühne angeordnet sein kann, damit die Einrichtung selbst nicht bewegt zu werden braucht, oder aber auf Schienen verfahrbar sein kann. Im letzteren Fall muss selbstverständlich das Ofenteil bewegt werden können.

Die Einrichtung weist eine Deckelplatte 3 auf in die eine Leitung 32 eingelassen ist, die zum Einführen von Heber- bzw. von Behandlungsgasen dient. An dem Druckbehälter befindet sich das Druckrohr 31, das an einen nicht gezeigten Kompressor zum Einpressen von Druckgas wie bspw. Argon angeschlossen ist.

Wird der Druckbehälter 10 in Kontakt mit dem Ofenteil gebracht und dicht verschlossen, so wird durch das Druckrohr 31 über der Schmelze ein Ueberdruck erzeugt. Man kann, wenn sich ein Teil der Schmelze innerhalb des Ofenraums befindet, das flüssige Metall umwälzen, indem man einen Gasstrom — Stickstoff, Argon — durch die Leitung 32 in die Verlängerung 2 leitet. Ausser dem Umwälzen in dem Sinn Pfanne/Rohr 2/Ofenraum/Rohr 1/Pfanne, findet eine Behandlung der Schmelze mit reinigendem Gas statt, die insbesondere dann erwünscht ist, wenn man die Schmelze durch die Schleuse 42 mit Zusätzen beschickt.

Im Ofenraum findet die elektrische, hier induktive Beheizung der Schmelze statt. Man kann bspw. in einem Konverter einen Kohlenstoffstahl herstellen, der auch Mangan enthalten kann und den Abstich bei 1 550°-1 570 °C vornehmen. Hierbei wird die Auskleidung des Konverters nicht sonderlich beansprucht. Anders wäre es, vollte man einen chromlegierten Stahl herstellen, da man dann eine wesentlich höhere Abstichtemperatur anvisieren müsste. Diese ist jedoch beim Sauerstoffaufblasen nur durch Oxydationswärme zu erzeugen, wobei notgedrungen Metallverluste entstehen und wobei die Auskleidung stark beansprucht wird. Bei Verwendung der erfindungsgemässen Einrichtung kann der Stahl relativ problemlos und bequem legiert und aufgeheizt werden. Hierbei stören auch, wie bereits erläutert, die sonst nicht zu vermeidenden Schlacken nicht.

Die Induktionsspule 50, die auch einen Rühreffekt hervorruft, ist wassergekühlt ; auf die Darstellung der Stutzen zum Ein- und Ausführen des Kühlmittels sowie der Stromversorgung wurde verzichtet.

Wie in der Zeichnung dargestellt, kann man das Oberteil der Ofenpfanne auch mit einem Vakuumstutzen 41 versehen und das Metall einer Vakuumbehandlung unterziehen. Das Anlegen von Vakuum kann auch zur Unterstützung des Einleitens von Metall herangezogen werden, so dass dieses durch Ueber- und/oder Unterdruck eingeleitet werden kann, sowie durch Gashebereffekt, wobei auch die elektromagnetische Kraft der Spule einen Beitrag zum Bewegen der Schmelze leistet.

Die Ausgestaltung der Einrichtung, die einen Druckbehälter vorsieht, bringt mehrere Vorteile mit sich. So lassen sich praktisch all gängigen Transportpfannen ohne jeglichen Umbau im Rahmen des erfindungsgemässen Verfahrens verwenden. Auch braucht man auf peinliche Sauberkeit der Transportpfannenränder nicht sonderlich zu achten. Weiter kann man die Dichtungsmechanismen, die in der Zeichnung global mit der Ziffer 12 bezeichnet sind, an Teilen der Einrichtung anordnen, die nicht unmittelbar grosser Hitze ausgesetzt sind. Schliesslich geht man der Schwierigkeit aus dem Weg, die im Vorhandensein der unerlässlichen Lüftungskanäle in den Transportpfannen bestehen. In der Tat sind konventionelle Transportpfannen aus dem erwähnten Grund zur Aufnahme von direktem, einseitigem Druck ungeeignet.

Selbstverständlich muss man im Hinblick auf den aufzubringenden Druck zwischen dem Druckbehälter 10 und der Deckelplatte 3 eine Verschlussicherung 11 anbringen und sowohl senkrecht als auch waagerecht angeordnete Dichtungen vorsehen. Letztere können, eben da sie sich ausserhalb extremer Temperaturverhältnisse befinden, von einer gängigen Qualität sein.

Beim Dimensionieren der erfindungsgemässen Vorrichtung ist darauf zu achten, dass die üblichen metallurgischen Transportpfannen mit Gehängelamellen versehen sind, die viel Raum beanspruchen so dass der Druckbehälter entsprechend sperrig ausfällt und die aufzubringende Druckgasmenge hoch ist. Die durch die Verwendung eines Druckbehälters gebotenen Vorteile wiegen diesen ungünstigen Umstand jedoch voll auf.

**Patentanspruch**

Vorrichtung zum metallurgischen Behandeln von Metallschmelzen vor dem Giessen, bei welchem lediglich die Metallphase der Schmelze mittels Druck über eine Rohrverbindung (1, 2) aus einer Pfanne (0) in eine elektrisch beheizbare Ofenpfanne (100) überführt und dort beheizt und metallurgisch behandelt wird, wobei ein Druckbehälter (10) in de die Pfanne (0) eingesetzt wird, mit einem abdichtenden Deckel versehen ist, dadurch gekennzeichnet, dass der Deckel aus der Ofenpfanne (100) selbst besteht, indem diese eine ringförmige Platte (3) aufweist, die über eine Dichtung (12) auf dem Rand des Druckbehälters (10) aufsitzt, sowie dass zumindest eine sich senkrecht nach unten erstreckende rohrförmige Verlängerung (1, 2) an der Ofenpfanne 100 vorgesehen ist, die in die sich im Druckßehälter (10) befindliche Pfanne (0) ragt.

## Claim

An apparatus for the metallurgical treatment of metal melts prior to teeming, wherein one transfers the metallic phase of the bath with the help of increased pressure, through a tubular connection (1, 2) from a ladle (0) to a ladle-furnace (100) that has electrical heating means, wherein the metal is both heated and metallurgically treated and wherein said ladle (0) is placed in a pressurized vessel (10) that has a pressure-tight-cover, characterised in that said cover is embodied by said ladle-furnace (100) which has a ring-shaped plate (3) fitted with a seal (12), which rides upon the edge of said pressurized vessel (10), and in that said ladle-furnace (100) has at least one tubular extension (1, 2) that extends vertically and downwards into said ladle (0) which is contained in said pressurized vessel (10).

## Revendication

Dispositif de traitement métallurgique de métaux en fusion avant la coulée, dans lequel seulement la phase liquide du métal en fusion est transférée par l'application d'une pression au moyen d'une liaison tubulaire (1, 2) d'une poche (0) dans un four poche (100) chauffé électriquement, dans lequel il est chauffé et traité métallurgiquement, où une cuve de pression (10) dans laquelle est placée la poche (0) est munie d'un couvercle assurant l'étanchéité, caractérisée par le fait que le couvercle est constitué par le four poche (100) lui-même et que celui-ci comporte une plaque annulaire (3), qui s'appuie par l'intermédiaire d'un joint (12) sur le bord de la cuve de pression (10) et en ce que le four proche (100) comporte au moins une rallonge tubulaire (1, 2) s'étendant verticalement vers le bas et pénètre dans la poche (0) qui se trouve dans la cuve de pression (10).

FIG.1